**Europäisches Patentamt**

**European Patent Office**

**Office européen des brevets**

(19)

(11) Veröffentlichungsnummer : **0 433 570 B1**

(12) **EUROPÄISCHE PATENTSCHRIFT**

(45) Veröffentlichungstag der Patentschrift :
29.12.93 Patentblatt 93/52

(51) Int. Cl.⁵ : **G01C 19/72**

(21) Anmeldenummer : **90118008.3**

(22) Anmeldetag : **19.09.90**

(54) **Verfahren und Anordnung zum Ermitteln von Winkelgeschwindigkeiten mit einem Faserringinterferometer.**

(30) Priorität : **20.12.89 DE 3941991**

(43) Veröffentlichungstag der Anmeldung :
**26.06.91 Patentblatt 91/26**

(45) Bekanntmachung des Hinweises auf die
Patenterteilung :
**29.12.93 Patentblatt 93/52**

(84) Benannte Vertragsstaaten :
**CH DE FR GB LI SE**

(56) Entgegenhaltungen :
**DE-A- 3 140 110**
**FR-A- 2 645 264**

(73) Patentinhaber : **ANT Nachrichtentechnik**
**GmbH**
**Gerberstrasse 33**
**D-71522 Backnang (DE)**

(72) Erfinder : **Göckler, Heinz, Dr.-Ing.**
**Elbinger Strasse 52**
**D-7150 Backnang (DE)**

## Beschreibung

Die vorliegende Erfindung betrifft ein Verfahren und eine Anordnung zum Ermitteln von Winkelgeschwindigkeiten mit Hilfe eines optischen Faserringinterferometers, wobei die dieses durchlaufenden Lichtwellen phasenmoduliert werden und das Ausgangssignal des Faserringinterferometer nach einer Analog-/Digital-Umsetzung ausgewertet wird, um die Winkelgeschwindigkeit zu ermitteln.

Ein derartiges Verfahren und eine Anordnung zu dessen Durchführung gehen aus der DE 31 40 110 A1 hervor. In der einen ringförmigen Lichtweg bildenden Lichtleitfaser des Ringinterferometers breiten sich zwei gegenläufige Lichtwellen aus, die beim Austritt aus der Lichtleitfaser miteinander interferieren. Die Interferenz hängt von der Winkelgeschwindigkeit ab, mit der die mindestens eine Windung bildende Lichtleitfaser gedreht wird. Der Winkelgeschwindigkeit ist die Phasendifferenz zwischen den beiden Lichtwellen, welche die Lichtleitfaser in entgegengesetzten Richtungen durchlaufen haben, proportional. Diese Phasendifferenz, sie wird als Sagnac-Phase bezeichnet, läßt sich, wie der DE 31 40 110 A1 zu entnehmen ist, aus den Amplituden der Spektrallinien des aus der Lichtleitfaser austretenden Interferenzlichts bestimmen.

Um ein für die Ermittlung der Sagnac-Phase geeignetes Ausgangssignal des Faserringinterferometers zu erhalten, werden die an einem Ende aus der Lichtleitfaser austretenden Lichtwellen phasenmoduliert. Die Auswertung des analogen Ausgangssignals, um die Sagnac-Phase zu bestimmen, erfolgt vorteilhafterweise durch eine digitale Signalverarbeitung. Da das analoge Ausgangssignal aufgrund der erforderlichen hohen Phasenmodulationsfrequenz für den nachfolgenden Analog-/Digital-Umsetzer eine ungünstige hohe Frequenzlage hat, wird gemäß der DE 31 40 110 A2 entweder die Leistung des in das Faserringinterferometer eingespeisten Lichts mit einer geeigneten Frequenz gepulst oder das Ausgangssignal mit einem Mischer vor der Analog-/Digital-Umsetzung in eine niedrigere Frequenzlage herabgesetzt. Beide Lösungen sind mit zusätzlichen Schaltungsaufwand verbunden. Ein weiterer Nachteil des Mischvorganges ist der, daß unerwünschte Mischprodukte entstehen, die durch zusätzliche analoge Filterung unterdrückt werden müssen, damit das Abtasttheorem erfüllt wird und somit keine unzulässigen spektralen Faltungsprodukte erzeugt werden, die das auszuwertende Signal stark verfälschen würden.

Der Erfindung liegt nun die Aufgabe zugrunde, ein Verfahren und eine Anordnung der eingangs genannten Art anzugeben, wodurch eine digitale Auswertung des Ausgangssignals des Faserringinterferometers mit geringem Schaltungsaufwand ermöglicht wird.

Erfindungsgemäß wird die Aufgabe durch die Merkmale der Ansprüche 1 und 10 gelöst. Vorteilhafte Ausführungen des erfundenen Verfahrens gehen aus den Ansprüchen 2 bis 9 und 11 hervor.

Nach der Erfindung wird die Frequenz des auszuwertenden Ausgangssignals des Faserringinterferometers ohne zusätzliche Schaltungsmittel in eine für eine digitale Signalverarbeitung günstige Frequenzlage umgesetzt, ohne daß störende Frequenzmischprodukte entstehen, die durch aufwendige Filteranordnungen zu unterdrücken wären.

Anhand zweier in der Zeichnung dargestellter Ausführungsbeispiele wird nachfolgend die Erfindung näher erläutert.

Figur 1   zeigt ein Blockschaltbild zur digitalen Signalverarbeitung des Ausgangssignals eines Faserringinterferometers und

Figur 2   zeigt dasselbe Blockschaltbild, versehen mit einer Schaltung zur digitalen Realisierung eines Phasenmodulationssignals.

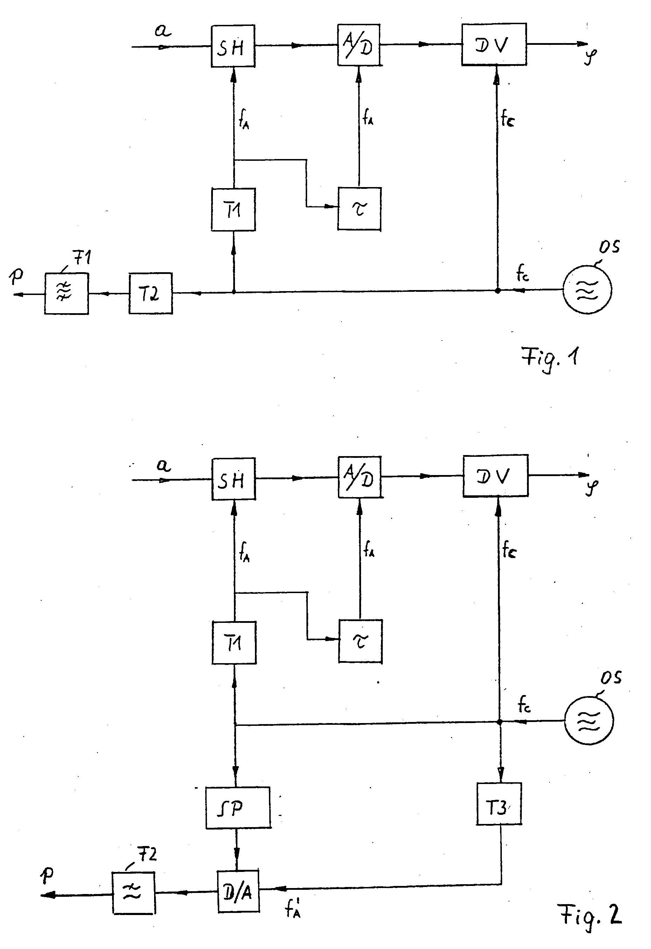

Wie das Blockschaltbild in Figur 1 zeigt, wird das analoge Ausgangssignal a des Faserringinterferometers, bevor es in einem Analog-/Digital-Umsetzer AD digitalisiert und dann in einer Datenverarbeitungsvorrichtung DV zur Ermittlung der Sagnac-Phase $\phi$ ausgewertet wird, einem Abtast-/Halteglied (Sample and Hold) SH zugeführt. Das Abtast-/Halteglied SH und der Analog-/Digitalumsetzer AD werden mit einer Abtastfrequenz $f_A$ betrieben, die erheblich unterhalb der Phasenmodulationsfrequenz f des Ausgangssignals a des Faserringinterferometers liegt, wodurch die Signalverarbeitung im Analog-/Digital-Umsetzer AD und in der Datenverarbeitungsvorrichtung DV (z.B. Mikroprozessor) weniger aufwendig ist. Die Abtastfrequenz $f_A$ muß allerdings so gewählt werden, daß die für die Ermittlung der Sagnacphase benötigten Spektrallinien ($f_n = n \cdot f$) des Ausgangssignals des Faserringnterferometers durch die Abtastung mit der Frequenz $f_A$ im Abtast-/Halteglied SH erfaßt werden.

Diese Voraussetzung wird von einer Abtastfrequenz $f_A$ erfüllt, für die folgende zwei Bedingungen gelten:

$$f_A = (f \pm f_\Delta)/m \quad (1)$$

$$f_A = \frac{1}{m} f_\Delta \quad (2)$$

wobei m und l ganzzahlig sind. l ist z.B. eine 2er Potenz oder ungeradzahlig, oder $l/2^i$ (mit i = 1,2 .., $l/2^i > 1$) ist ungeradzahlig.

Aus (1) und (2) ergibt sich für die Frequenz $f_A$

2

$$f = \frac{f}{l \mp 1} \quad (3)$$

Für die n-te Spektrallinie $f_n$, welche das n-fache der Phasenmodulationsfrequenz f ($f_n = n \cdot f$) ist, gilt

$$n \cdot f_\Delta = \frac{nf}{l \mp 1} = \frac{f_n}{l \mp 1} \quad (4)$$

Dies zeigt, daß die Spektrallinien durch die Abtastung mit der Frequenz $f_A$ gemäß (1) und (2) in ein Frequenzraster überführt werden können, das in einem niedrigeren Frequenzbereich liegt, der für die digitale Signalverarbeitung günstiger ist.

Aus den Gleichungen (1) und (2) folgt:

$$f_A = \frac{1}{n}\frac{l}{l \mp 1}f \quad (5)$$

Schließlich folgt aus Gleichung (3)

$$f = (l \mp 1) f_\Delta \quad (6)$$

Die Gleichungen (5) und (6) zeigen, daß die Abtastfrequenz $f_A$ für das Abtast-/Halteglied SH und für den Analog-/Digital-Umsetzer AD und die Phasenmodulationsfrequenz f aus einer gemeinsamen Referenzfrequenz

$$f_c = m_1 \cdot l \, (l \mp 1) f_\Delta \quad (7)$$

($m_1$ ist ganzzahlig)

durch Frequenzteilung abgeleitet werden können.

Es gilt also:

$$f_A = \frac{f_c}{m_1 \, (l \mp 1) \, m} \quad (8)$$

$$f = \frac{f_c}{m_1 \cdot l} \quad (9)$$

Wie der Figur 1 zu entnehmen ist, wird aus der von einem Oszillator OS erzeugten Referenzfrequenz $f_c$ über einen ersten Teiler T1 mit dem Teilungsfaktor $1/m_1$ ($l \mp 1$) m (vgl. (8)) die Abtastfrequenz $f_A$ und über einen zweiten Teiler T2 mit dem Teilungsfaktor $1/m_1$ l (vgl. (9)) die Phasenmodulationsfrequenz f abgeleitet. Am Ausgang eines dem zweiten Teiler T2 nachgeschalteten Glättungsfilter F1 steht dann ein Ansteuersignal

$$p = \sin 2\pi f t \quad (10)$$

für den zum Faserringinterferometer gehörenden Phasenmodulator zur Verfügung.

Ein zwischen den ersten Teiler T1 und den Analog-/Digital-Umsetzer geschaltetes Verzögerungsglied $\tau$ berücksichtigt die Signallaufzeit in dem Abtast-/Halteglied SH.

Das zuvor erwähnte Abtast-/Halteglied SH ist nicht zwingend erforderlich. Nur für den Fall, daß der Analog-/Digitalumsetzer AD relativ langsam arbeitet, ist ein Abtast-/Halteglied SH vorzuschalten, das eine kurze Übernahmezeit des momentanen Abtastwertes aufweist.

Das Blockschaltbild der Figur 2 zeigt, daß das Ansteuersignal p gemäß Gleichung (10) auch aus einem in einem Speicher SP - beispielsweise in einem ROM - abgelegten Digitalsignal der Form $\sin(2\pi kf)/(m_2 \, f_A)$ [k, $m_2$ ganzzahlig] hergeleitet werden kann. Das Digitalsignal wird einem Digital-/Analog-Umsetzer DA zugeführt. Das analoge Ausgangssignal des Digital-/Analog-Umsetzers DA hat, nachdem es über ein Glättungsfilter F2 geführt worden ist, die in Gleichung (10) beschriebene Form. Der Digital-/Analog-Umsetzer DA wird mit der Abtastfrequenz $f_A$' betrieben, die größer als die in der übrigen Schaltung verwendete Abtastfrequenz $f_A$ ist. Der Aufwand für das Glättungsfilter F2 bleibt klein, wenn

$$f_A' = m_2 f_A \quad (11)$$

ist (z.B. $m_2 \cong 4$).

Es ist zweckmäßig einen Oszillator OS einzusetzen, dessen Referenzfrequenz $f_c$ nachstimmbar ist. Somit lassen sich z.B. temperaturabhängige Ablagen der Phasenmodulationsfrequenz f ausgleichen.

## Patentansprüche

1. Verfahren zum Ermitteln von Winkelgeschwindigkeiten mit Hilfe eines optischen Faserringinterferometers, wobei die dieses durchlaufenden Lichtwellen phasenmoduliert werden und das Ausgangssignal des Faserringinterferometers nach einer Analog-/Digital-Umsetzung ausgewertet wird, um die Winkelgeschwindigkeit zu ermitteln, dadurch gekennzeichnet, daß das Ausgangssignal (a) mit einer Frequenz $f_A$ abgetastet wird, die so gewählt wird, daß

$$f_A = (f \pm f_\Delta)/m$$

3

mit der Bedingung

$$f_A = \frac{l}{m} f_\Delta \qquad \text{gilt,}$$

wobei die Faktoren m und l ganzzahlig sind und $f_\Delta$ ein ganzzahliger Teil der Phasenmodulationsfrequenz f ist.

2. Verfahren nach Anspruch 1, dadurch gekennzeichnet, daß das Ausgangssignal (a) vor der Analog-/Digitalumsetzung (AD) in einem Abtast-/Halteglied (SH) mit der Frequenz $f_A$ abgetastet wird.

3. Verfahren nach Anspruch 1, dadurch gekennzeichnet, daß die Abtastfrequenz $f_A$ und die Phasenmodulationsfrequenz f durch Frequenzteilung aus einer Referenzfrequenz

$$f_c = m_1 \cdot l \, (l \mp 1) \, f_\Delta \,,$$

wobei $m_1$ ganzzahlig ist, abgeleitet werden.

4. Verfahren nach Anspruch 3, dadurch gekennzeichnet, daß die Referenzfrequenz $f_c$ veränderbar ist, um die Phasenmodulationsfrequenz bei z.B. temperaturabhängigen Ablagen vom Sollwert nachführen zu können.

5. Verfahren nach Anspruch 1, 2 oder 3, dadurch gekennzeichnet, daß der Faktor l ungeradzahlig ist.

6. Verfahren nach Anspruch 1, 2 oder 3, dadurch gekennzeichnet, daß der Faktor $l/2^i$ (i = 1,2...) ungeradzahlig ist.

7. Verfahren nach Anspruch 1, 2 oder 3, dadurch gekennzeichnet, daß der Faktor l eine 2er Potenz ist.

8. Verfahren nach Anspruch 1, dadurch gekennzeichnet, daß aus einem digitalisierten Signal der Form
$\sin (2\pi kf)/(m_2 \, f_A)$ (k, $m_2$ ganzzahlig)
ein analoges Signal $\sin 2\pi ft$ abgeleitet wird zur Ansteuerung einer Einrichtung, welche die das Faserringinterferometer durchlaufenden Lichtwellen phasenmoduliert.

9. Verfahren nach Anspruch 7, dadurch gekennzeichnet, daß das digitalisierte Signal, welches in einem Speicher (SP) abgelegt ist, aus diesem herausgelesen und dann einer Digital-/Analog-Umsetzung (DA) unterzogen wird und zwar mit einer Abtastfrequenz $f_A' = m_2 \cdot f_A$.

10. Anordnung zum Ermitteln von Winkelgeschwindigkeiten mit einem optischen Faserringinterferometer, wobei ein Phasenmodulator die den Faserring durchlaufenden Lichtwellen phasenmoduliert und nach einer Analog-/Digital-Umsetzung des phasenmodulierten Ausgangssignals des Faserringinterferometers eine Auswerteeinrichtung aus dem digitalisierten Ausgangssignal die Winkelgeschwindigkeit ermittelt, dadurch gekennzeichnet, daß ein Analog-/Digital-Umsetzer (AD) vorgesehen ist, der das Ausgangssignal (a) mit einer Frequenz $f_A$ abtastet, die so gewählt ist, daß
$$f_A = (f \pm f_\Delta)/m$$
mit der Bedingung

$$f_A = \frac{1}{m} f_\Delta \text{ gilt,}$$

wobei die Faktoren m und l ganzzahlig sind und $f_\Delta$ ein ganzzahliger Teil der Phasenmodulationsfrequenz f ist.

11. Anordnung nach Anspruch 10, dadurch gekennzeichnet, daß dem Analog-/Digitalumsetzer (AD) ein Abtast-/Halteglied (SH) vorgeschaltet ist, welches das Ausgangssignal (a) mit der Frequenz $f_A$ abtastet.

## Claims

1. A method of determining angular velocities with the aid of an optical fibre ring interferometer, wherein the light waves passing through the fibre ring interferometer are phase modulated and the output signal of the fibre ring interferometer, after being converted in an analog/digital converter, is evaluated so as to determine the angular velocity, characterised in that the output signal (a) is sampled at a frequency $f_A$ which is selected in such a manner that the following conditions apply:
$$f_A = (f \pm f_\Delta)/m$$

and

$$f_A \ = \ \frac{\ell}{m} \, f_\Delta$$

with the factors m and e being integers and $f_\Delta$ being a whole number component of phase modulation frequency f.

2. A method according to claim 1, characterised in that the output signal (a), before it is converted in an analog/digital converter (AD), is sampled in a sample-and-hold member (SH) at a frequency $f_A$.

3. A method according to claim 1, characterised in that the sampling frequency $f_A$ and the phase modulation frequency f are derived by frequency division from a reference frequency
$$f_c \ = \ m_1 \cdot \ell \ (\ell \mp 1) \, f_\Delta$$
where $m_1$ is an integer.

4. A method according to claim 3, characterised in that the reference frequency $f_C$ is variable in order to be able to cause the phase modulation frequency to follow if there are, for example, temperature dependent deviations from the desired value.

5. A method according to claim 1, 2 or 3, characterised in that the factor e is an odd number.

6. A method according to claim 1, 2 or 3, characterised in that the factor $\ell/2^i$ (i = 1, 2, ...) is an odd number.

7. A method according to claim 1, 2 or 3, characterised in that the factor e is a power of two.

8. A method according to claim 1, characterised in that an analog signal sin $2\pi ft$ is derived from a digitalised signal in the form of
$$\sin (2\pi kf)/(m_2 \, f_A) \ (\text{where } k, m_2 \text{ are integers})$$
in order to actuate a device which phase modulates the light waves passing through the fibre ring interferometer.

9. A method according to claim 7, characterised in that the digitalised signal, which is stored in a memory (SP), is read out of said memory and then subjected to digital/analog conversion (DA) at a sampling frequency $f_A' = m_2 \cdot f_A$.

10. An arrangement for determining angular velocities by means of an optical fibre ring interferometer, with the light waves passing through said fibre ring interferometer being phase modulated and, after analog-digital conversion of the phase-modulated output signal of the fibre ring interferometer, an evaluation device determines the angular velocity from the digitalised output signal, characterised in that an analog/digital converter (AD) is provided which samples the output signal (a) at a frequency $f_A$ selected so that the following conditions are met:
$$f_A \ = \ (f \ + \ f_\Delta)/m$$
and
$$f_A \ = \ \frac{\ell}{m} \, f_\Delta$$
with the factors m and $\ell$ being integers and $f_\Delta$ being a whole number component of phase modulation frequency f.

11. An arrangement according to claim 10, characterised in that a sample-and-hold member (SH) is connected to the input of the analog/digital converter (AD) for sampling the output signal (a) with the frequency $f_A$.

## Revendications

1. Méthode pour déterminer les vitesses angulaires à l'aide d'un interféromètre annulaire à fibre optique, méthode dans laquelle on module en phase les ondes lumineuses parcourant cet interféromètre et, après conversion analogique-numérique, on traite le signal de sortie de l'interféromètre annulaire à fibre optique pour déterminer la vitesse angulaire, méthode caractérisée par le fait que l'on échantillonne le signal de sortie (a) avec une fréquence $f_A$ que l'on choisit de façon à avoir:

$$f_A = (f \pm f_\Delta)/m$$

avec la condition

$$f_A = \frac{l}{m} f_\Delta$$

les facteurs m et l étant des entiers et f étant une partie entière de la fréquence de modulation de phase f.

2. Méthode selon la revendication 1, caractérisée par le fait qu'avant conversion analogique-numérique (AD), on échantillonne le signal de sortie (a) dans un organe d'échantillonnage (SH) à la fréquence $f_A$.

3. Méthode selon la revendication 1, caractérisée par le fait que l'on fait dériver la fréquence d'échantillonnage $f_A$ et la fréquence de modulation de phase f par division de fréquence à partir d'une fréquence de référence.

$$f_c = m_1 \cdot 1 \, (1 \mp 1) \, f_\Delta \, ,$$

$m_1$ étant un entier.

4. Méthode selon la revendication 3, caractérisée par le fait que l'on peut modifier la fréquence de référence $f_c$ pour pouvoir adapter la fréquence de modulation de phase par exemple en cas d'écarts, fonction de la température, par rapport à la valeur prescrite.

5. Méthode selon la revendication 1, 2 ou 3, caractérisée par le fait que le facteur 1 est un nombre impair.

6. Méthode selon la revendication 1, 2 ou 3, caractérisée par le fait que le facteur $1/2^i$ (i = 1,2...) est un nombre impair.

7. Méthode selon la revendication 1, 2 ou 3, caractérisée par le fait que le facteur 1 est un carré.

8. Méthode selon la revendication 1, caractérisée par le fait que d'un signal numérisé de la forme:

$$\sin (2\pi kf)/(m_2 \, f_A) \quad (k, \, m_2 \text{ entiers})$$

On fait dériver un signal analogique $\sin 2\pi ft$ pour commander un dispositif qui module en phase les ondes lumineuses parcourant l'interféromètre annulaire à fibre optique.

9. Méthode selon la revendication 7, caractérisée par le fait qu'on lit dans une mémoire (SP) le signal numérisé qui y est mémorisé, puis qu'on le soumet à une conversion numérique-analogique (DA) et ceci avec une fréquence d'échantillonnage $f_A' = m_2 \cdot f_A$.

10. Dispositif pour déterminer des vitesses angulaires comportant un interféromètre annulaire à fibre optique, dispositif dans lequel un modulateur de phase module en phase les ondes lumineuses parcourant la fibre et dans lequel, après conversion analogique-numérique du signal de sortie, modulé en phase, de l'interféromètre annulaire à fibre optique, un dispositif de traitement détermine la vitesse angulaire à partir du signal de sortie numérisé, dispositif caractérisé par le fait qu'est prévu un convertisseur analogique-numérique (AD) qui échantillonne le signal de sortie (a) avec une fréquence $f_A$ que l'on choisit de façon à avoir:

$$f_A = (f \pm f_\Delta)/m$$

avec la condition

$$f_A = \frac{l}{m} f_\Delta$$

les facteurs m et l étant des entiers et f étant une partie entière de la fréquence de modulation de phase f.

11. Dispositif selon la revendication 10, caractérisé par le fait qu'en amont du convertisseur analogique-numérique (AD) est connecté un organe d'échantillonnage (SH) qui échantillonne le signal de sortie (a) à la fréquence $f_A$.

Fig. 1

Fig. 2